# EUROPÄISCHE PATENTSCHRIFT

(11) **EP 2 002 169 B1**
(45) Veröffentlichungstag und Bekanntmachung des Hinweises auf die Patenterteilung: **19.08.2009**
(21) Anmeldenummer: 07711965.9
(22) Anmeldetag: 15.03.2007
(51) Int. Cl.: F16N 13/22, F16N 13/14, F04B 1/14

(54) **SCHMIERMITTEL- ODER HYDRAULIKPUMPE**
LUBRICANT OR HYDRAULIC PUMP
POMPE A LUBRIFIANT OU POMPE HYDRAULIQUE

(30) Priorität: 05.04.2006 DE 202006005682 U
(43) Veröffentlichungstag der Anmeldung: 17.12.2008
(73) Patentinhaber: Lincoln GmbH, 69190 Walldorf (DE)
(72) Erfinder: PALUNCIC, Zdravko, 67067 Ludwigshafen (DE); SCHÖNFELD, Andreas, 68789 St. Leon-Rot (DE)
(74) Vertreter: KEIL & SCHAAFHAUSEN Patentanwälte
(86) Internationale Anmeldenummer: PCT/EP2007/002299
(87) Internationale Veröffentlichungsnummer: WO 2007/112837

(56) Entgegenhaltungen:
- EP-A1- 1 452 733
- EP-A2- 0 688 953
- DE-U1- 29 611 935
- US-A- 2 381 056
- US-A- 5 897 300

## Beschreibung

Die Erfindung betrifft eine Schmiermittel- oder Hydraulikpumpe zur Förderung von Öl oder dergleichen mit einem Gehäuse, einem an oder in dem Gehäuse vorgesehenen Einlass, einem in dem Gehäuse drehbar gelagerten Antriebselement und wenigstens einem Pumpenelement, welches zur Förderung von Öl oder dergleichen mit dem Antriebselement zusammenwirkt.

Derartige Pumpen werden zur Förderung von Schmiermittel an Schmierstellen von Maschinen oder zur Förderung eines Hydraulikfluids eingesetzt. Beispielsweise können derartige Pumpen für Pressen, insbesondere Ballenpressen, eingesetzt werden. Der Aufbau solcher Pumpen ist teilweise kompliziert mit vielen verschiedenen Komponenten. Dies verteuert die Herstellung einer derartigen Pumpe. Zudem ist es oft nicht möglich, die Anzahl der eingesetzten Pumpenelemente rasch an die individuellen Einsatzerfordernisse anzupassen, so dass die Einsatzmöglichkeiten bekannter Pumpen teilweise eingeschränkt sind.

Eine Hydraulikpumpe gemäß dem Oberbegriff des Anspruchs 1 ist aus De 29611935 U bekannt.

Aufgabe der vorliegenden Erfindung ist es daher, eine Schmiermittel- oder Hydraulikpumpe der eingangs genannten Art zu schaffen, welche besonders kostengünstig herstellbar und variabel einsetzbar ist.

Diese Aufgabe wird erfindungsgemäß durch die Merkmale des Anspruchs 1 gelöst. Durch den Einsatz von baugleichen Gehäuseschalen wird die Anzahl der vorzuhaltenden Komponenten im Aufbau einer derartigen Pumpe deutlich reduziert. Hierdurch lassen sich die Kosten für die Herstellung einer Pumpe reduzieren.

Wenn die Gehäuseschalen zudem derart ausgebildet sind, dass eine unterschiedlich große Anzahl von Pumpenelementen vorgesehen werden kann, werden die Einsatzmöglichkeiten der Pumpe vergrößert.

Nach der Erfindung weisen die Gehäuseschalen der erfindungsgemäßen Schmiermittel- oder Hydraulikpumpe jeweils mehrere zumindest vor dem Zusammenbau des Gehäuses über Sollbruchstellen verschlossene Öffnungen zum Einbau von Pumpenelementen, Antriebs- oder Abtriebswellen und/oder Ein- oder Auslässen und/oder Entlüftungsöffnungen auf. Durch die Gestaltung der Gehäuseschalen mit über Sollbruchstellen verschlossenen Öffnungen können die Gehäuseschalen beispielsweise vor dem Zusammenbau des Gehäuses vollständig geschlossen sein. In diesem Fall werden während des Zusammenbaus des Gehäuses nur die beispielsweise für Ein- oder Auslässe, Wellen- oder Pumpenelemente erforderlichen Öffnungen an den Sollbruchstellen geöffnet. Die übrigen Öffnungen können geschlossen bleiben, ohne dass hierzu gesonderte Verschlussstopfen oder dergleichen vorgesehen werden müssen. Dies vereinfacht den Bau der Pumpe. Es ist jedoch auch möglich, bei einer Änderung der Einsatzbedingungen einzelne Öffnungen durch Stopfen oder dergleichen wieder zu verschließen bzw. neue Öffnungen an den Sollbruchstellen zu eröffnen. Die Pumpe ist somit variabel einsetzbar.

In Weiterbildung des Erfindungsgedankens ist es vorgesehen, dass das Gehäuse aus zwei insbesondere miteinander verschraubten Gehäuseschalen gebildet ist, die zumindest vor dem Zusammenbau des Gehäuses gleich sind. Die beiden Gehäuseschalen, die insbesondere spiegelbildlich aneinander befestigbar sind, lassen sich durch die größere Stückzahl besonders wirtschaftlich herstellen. Bei Bedarf können zur Vorbereitung oder während des Zusammenbaus des Gehäuses eine oder beide Gehäuseschalen individuell an die Einsatzbedingungen angepasst werden.

Es hat sich als besonders vorteilhaft erwiesen, wenn die Gehäuseschalen mehrere Öffnungen zum Einbau von Pumpenelementen aufweisen. So können beispielsweise vier, sechs, acht, zehn, zwölf oder mehr vorzugsweise vor dem Zusammenbau des Gehäuses über Sollbruchstellen verschlossene Öffnungen für die Pumpenelemente vorgesehen sein. Damit kann sowohl die Position eines Pumpenelements an dem Gehäuse den Einsatzbedingungen angepasst werden, als auch die Anzahl der Pumpenelemente variiert werden. Die Gehäuseschalen sind also für eine Vielzahl verschiedener Pumpen einsetzbar und hierdurch besonders kostengünstig herstellbar.

Insbesondere wird es bevorzugt, wenn die Öffnungen in den Gehäuseschalen, welche zum Einbau von Pumpenelementen vorgesehen sind, auf wenigstens einer, vorzugsweise auf zwei zu der Achse des Antriebselements konzentrischen Bahnen liegen. Bei einer derartigen Ausgestaltung der Gehäuseschalen kann das Antriebselement, welches vorzugsweise als eine Taumelscheibe ausgebildet ist, wenigstens eine, insbesondere zwei zu der Achse des Antriebselements konzentrisch angeordneten Laufbahnen aufweisen, mit welchen das wenigstens eine Pumpenelement zur Förderung von Öl oder dergleichen zusammenwirkt. In Abhängigkeit der Gestaltung der Laufbahnen wird somit jedes Pumpenelement bei einer Umdrehung des Antriebselements zumindest einmal hin und her bewegt.

Eine besonders kostengünstige und wirtschaftliche Fertigung der Gehäuseschalen kann dadurch erreicht werden, dass diese als Kunststoff-Spritzgussteile ausgebildet sind. Dabei wird es besonders bevorzugt, wenn die Gehäuseschalen leicht aus den Formeinsätzen des Spritzwerkzeugs entformbar sind. Um dies zu ermöglichen, sind die Gehäuseschalen insbesondere hinterschnittfrei ausgebildet.

Innerhalb der erfindungsgemäßen Schmiermittel- und Hydraulikpumpe kann in Abhängigkeit der Einsatzbedingungen ein Übersetzungs- oder ein Untersetzungsgetriebe vorgesehen sein. So weist das Antriebselement vorzugsweise an seiner äußeren Umfangsfläche eine Verzahnung auf, die mit einer Verzahnung eines auf der Eingangswelle festgelegten Antriebsritzels in Eingriff steht, so dass ein Eingangsgetriebe gebildet wird.

Nach einer weiteren Ausführungsform der Erfindung ist das Antriebselement auf einer Welle mit einem aus dem Gehäuse herausragenden freien Wellenende angeordnet. Die Verlängerung der Welle des Antriebselements ermöglicht es, dass mit dem freien Wellenende eine weitere Pumpe, beispielsweise eine Fettpumpe, angetrieben wird. Es lassen sich somit mehrere Pumpen hintereinander schalten.

Weiterbildungen, Vorteile und Anwendungsmöglichkeiten der Erfindung ergeben sich aus der nachfolgenden Beschreibung eines Ausführungsbeispiels und der Zeichnung.

Es zeigen schematisch:
- Fig. 1: eine Seitenansicht einer erfindungsgemäßen Schmiermittel- oder Hydraulikpumpe,
- Fig. 2: einen Schnitt durch die Schmiermittel- oder Hydraulikpumpe nach Fig. 1 entlang der Linie A-A,
- Fig. 3: einen Schnitt durch die Schmiermittel- oder Hydraulikpumpe nach Fig. 1 entlang der Linie B-B und
- Fig. 4: in Perspektivansicht die Schmiermittel- oder Hydraulikpumpe nach Fig. 1.

Die in den Figuren dargestellte Schmiermittel- und Hydraulikpumpe weist ein Gehäuse 1 auf, welches aus zwei Gehäuseschalen 2 und 3 aufgebaut ist. Die beiden Gehäuseschalen 2 und 3 sind zumindest vor dem Zusammenbau des Gehäuses baugleich oder bauähnlich und weisen mehrere durch Sollbruchstellen verschlossene Öffnungen auf.

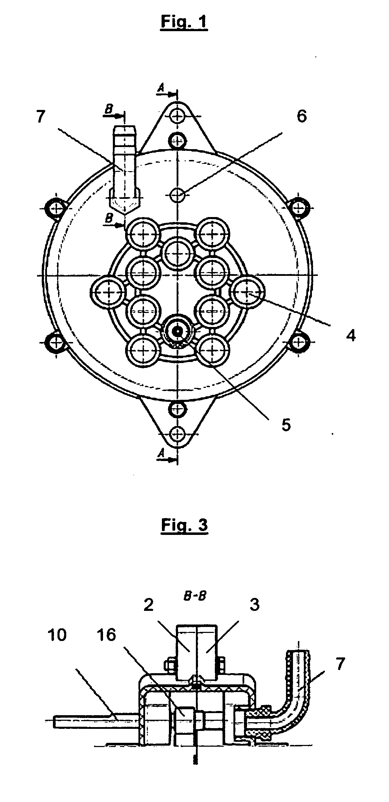

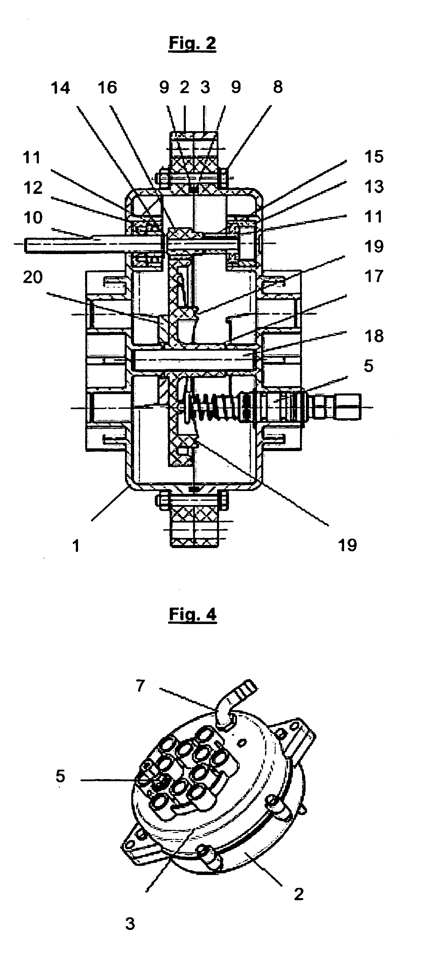

So sind, wie insbesondere aus den Figuren 1 und 4 ersichtlich ist, mehrere Öffnungen 4 vorgesehen, welche auf zwei konzentrischen Bahnen angeordnet sind. In der gezeigten Ausführungsform ist in einer der Öffnungen 4 ein Pumpenelement 5 eingebaut, nachdem die Sollbruchstelle eröffnet wurde. Weiter ist eine Öffnung 6 als Entlüftungsöffnung vorgesehen. Alternativ kann durch eine derartige Öffnung nach Eröffnen der Sollbruchstelle auch eine Antriebs- oder Abtriebswelle durchgeführt werden. Auch für einen Einlass 7 ist eine entsprechende Öffnung in den Gehäuseschalen 2 und 3 vorgesehen.

Die beiden Gehäuseschalen 2 und 3 sind spiegelsymmetrisch zueinander zusammengefügt und durch eine Verschraubung 8 miteinander verbunden. Zwischen den beiden Gehäuseschalen 2 und 3 sind Dichtringe 9 vorgesehen, um das Gehäuse 1 abzudichten.

Wie aus den Figuren 2 und 3 ersichtlich ist, führt eine Antriebswelle 10 in das Gehäuse 1. Die Antriebswelle 10 ist über zwei beispielsweise als Rillenkugellager 11 ausgebildete Lager in den Gehäuseschalen 2 und 3 geführt und kann auf der in Figur 2 linken Seite durch einen Wellendichtring 12 abgedichtet sein. Auf der in Figur 2 rechten Seite ist das Rillenkugellager 11 in einer Lagerbuchse 13 aufgenommen.

Auf der Antriebswelle 10 ist über eine Sicherungsscheibe 14 und eine Hülse 15 ein Antriebsritzel 16 angeordnet. Das Antriebsritzel 16 steht dabei mit einer Verzahnung in Eingriff, die am äußeren Umfang einer Taumelscheibe 17 vorgesehen ist, welche auf einer Welle 18 in dem Gehäuse 1 drehbar gelagert ist. Das Antriebsritzel 16 und die Taumelscheibe 17 bilden somit ein Eingangsgetriebe der Pumpe.

Die Taumelscheibe 17 weist zwei zu der Welle 18 konzentrische Laufbahnen 19 als Rotations-Linear-Umsetzungsgetriebe auf, die eine sich in Umfangsrichtung verändernde Höhe aufweisen. Das Pumpenelement 5 steht, wie aus Figur 2 ersichtlich ist, mit der inneren der beiden Laufbahnen 19 in Kontakt, so dass durch eine Umdrehung der Taumelscheibe 17 das Pumpenelement zur Förderung von Öl oder dergleichen, welches über den Einlass 7 in das Gehäuses 1 gelangt, gefördert wird.

Zur Aufnahme der durch das wenigstens eine Pumpenelement 5 auf die Laufbahnen 19 der Taumelscheibe 17 ausgeübten Kraft, welche in axialer Richtung der Welle 18 wirkt, ist zwischen der Taumelscheibe 17 und dem Gehäuse 1 eine Gleitscheibe 20 angeordnet.

In der dargestellten Ausführungsform ist nur ein einziges Pumpenelement 5 abgebildet. Es können jedoch auch in anderen Öffnungen 4 nach Eröffnung der Sollbruchstellen weitere Pumpenelemente 5 eingesetzt werden.

Wie insbesondere aus der Schnittansicht der Figuren 2 und 3 hervorgeht, ist die Schalengeometrie der beiden Gehäuseschalen 2 und 3 so gewählt, dass diese sich leicht durch Öffnen der Formeinsätze eines Spritzgusswerkzeuges entformen lassen. Die Gehäuseschalen 2 und 3 lassen sich daher sehr wirtschaftlich als Kunststoff-Spritzgussteile herstellen.

### Bezugszeichen:

- 1: Gehäuse
- 2,3: Gehäuseschale
- 4: Öffnung
- 5: Pumpenelement
- 6: (Entlüftungs-)Öffnung
- 7: Einlass
- 8: Verschraubung
- 9: Dichtring
- 10: Antriebswelle
- 11: Rillenkugellager
- 12: Wellendichtring
- 13: Lagerbuchse
- 14: Sicherungsscheibe
- 15: Hülse
- 16: Antriebsritzel
- 17: Taumelscheibe
- 18: Welle
- 19: Laufbahn
- 20: Gleitscheibe

## Patentansprüche

1. Schmiermittel- oder Hydraulikpumpe zur Förderung von Öl oder dgl. mit einem Gehäuse (1), welches aus zwei zumindest im Wesentlichen bauähnlichen oder -gleichen Gehäuseschalen (2, 3) gebildet ist, einem an oder in dem Gehäuse (1) vorgesehenen Einlass (7), einem in dem Gehäuse (1) drehbar gelagerten und insbesondere als Taumelscheibe (17) ausgebildeten Antriebselement und wenigstens einem Pumpenelement (5), welches zur Förderung von Öl oder dgl. mit dem Antriebselement (17) zusammenwirkt, **dadurch gekennzeichnet, dass** die Gehäuseschalen (2, 3) jeweils mehrere zumindest vor dem Zusammenbau des Gehäuses (1) über Sollbruchstellen verschlossene Öffnungen (4,6) zum Einbau von Pumpenelementen (5), Antriebs- oder Abtriebswellen (10) und/oder Ein- oder Auslässen (7) aufweist.

2. Schmiermittel- oder Hydraulikpumpe nach Anspruch 1, **dadurch gekennzeichnet, dass** das Gehäuse (1) aus zwei insbesondere miteinander verschraubten Gehäuseschalen (2, 3) gebildet ist, die zumindest vor dem Zusammenbau des Gehäuses (1) im Wesentlichen bauähnlich sind.

3. Schmiermittel- oder Hydraulikpumpe nach Anspruch 1 oder 2, **dadurch gekennzeichnet, dass** die Gehäuseschalen (2, 3) wenigstens eine, vorzugsweise wenigstens sechs, insbesondere zwölf zumindest vor dem Zusammenbau des Gehäuses (1) über Sollbruchstellen verschlossene Öffnungen (4) zum Einbau von Pumpenelementen (5) aufweisen.

4. Schmiermittel- oder Hydraulikpumpe nach einem der Ansprüche 1 bis 3, **dadurch gekennzeichnet, dass** in den Gehäuseschalen (2, 3) mehrere Öffnungen (4) zum Einbau von Pumpenelementert (5) vorgesehen sind, die auf wenigstens einer, vorzugsweise auf zwei zu der Achse (18) des Antriebselements (17) konzentrischen Bahnen liegen.

5. Schmiermittel- oder Hydraulikpumpe nach einem der Ansprüche 1 bis 4, **dadurch gekennzeichnet, dass** das Antriebselement als eine Taumelscheibe (17) ausgebildet ist, auf welcher wenigstens eine, vorzugsweise zwei zu der Achse (18) des Antriebselements (17) konzentrisch angeordnete Laufbahnen (19) aufweist, mit welchen das wenigstens eine Pumpenelement (5) zur Förderung von Öl oder dgl. zusammenwirkt.

6. Schmiermittel- oder Hydraulikpumpe nach einem der Ansprüche 1 bis 5, **dadurch gekennzeichnet, dass** die Gehäuseschalen (2, 3) als leicht entformbare und vorzugsweise hinterschnittfreie Kunststoff-Spritzgussteile ausgebildet sind.

7. Schmiermittel- oder Hydraulikpumpe nach einem der Ansprüche 1 bis 6, **dadurch gekennzeichnet, dass** das Antriebselement (17) an einer äußeren Umfangsfläche eine Verzahnung aufweist, die mit einer Verzahnung eines auf einer Eingangswelle (10) festgelegten Antriebsritzels (16) in Eingriff steht.

8. Schmiermittel- oder Hydraulikpumpe nach einem der Ansprüche 1 bis 7, **dadurch gekennzeichnet, dass** das Antriebselement (17) auf einer Welle (18) mit einem aus dem Gehäuse (1) herausragenden, freien Wellenende angeordnet ist.

9. Presse, insbesondere Ballenpresse, mit einer Schmiermittel- oder Hydraulikpumpe nach einem der Ansprüche 1 bis 8.

## Claims

1. A lubricant or hydraulic pump for delivering oil or the like, with a housing (1) that is formed by at least two housing shells (2, 3) of essentially similar or identical construction, an inlet (7) that is provided on or in the housing (1), a drive element that is rotatably mounted in the housing (1) and realized, in particular, in the form of a swash plate (17), and at least one pump element (5) that cooperates with the drive element (17) in order to deliver oil or the like, **characterized in that** the housing shells (2, 3) respectively feature several openings (4, 6) that are closed by means of rupture joints at least before the assembly of the housing (1) and serve for the installation of pump elements (5), input or output shafts (10) and/or inlets or outlets (7).

2. The lubricant or hydraulic pump according to Claim 1, **characterized in that** the housing (1) is formed by two housing shells (2, 3) that are, in particular, screwed together and have an essentially similar construction at least before the assembly of the housing (1).

3. The lubricant or hydraulic pump according to Claim 1 or 2, **characterized in that** the housing shells (2, 3) feature at least one, preferably at least six, particularly twelve openings (4) that are closed by means of rupture joints at least before the assembly of the housing (1) and serve for the installation of pump elements (5).

4. The lubricant or hydraulic pump according to one of Claims 1 to 3, **characterized in that** several openings (4) for the installation of pump elements (5) are provided in the housing shells (2, 3), wherein said openings lie on at least one, preferably on two tracks that are arranged concentric to the axis (18) of the drive element (17).

5. The lubricant or hydraulic pump according to one of Claims 1 to 4, **characterized in that** the drive element is realized in the form of a swash plate (17) that features at least one, preferably two raceways (19) that are arranged concentric to the axis (18) of the drive element (17), wherein the at least one pump element (5) cooperates with said raceways in order to deliver oil or the like.

6. The lubricant or hydraulic pump according to one of Claims 1 to 5, **characterized in that** the housing shells (2, 3) are realized in the form of injection-moulded plastic parts that can be easily removed from the mould and are preferably free of undercuts.

7. The lubricant or hydraulic pump according to one of Claims 1 to 6, **characterized in that** an outer circumferential surface of the drive element (17) features a toothing that meshes with a toothing of a driving opinion (16) fixed on an input shaft (10).

8. The lubricant or hydraulic pump according to one of Claims 1 to 7, **characterized in that** the drive element (17) is arranged on a shaft (18) with a free shaft end that protrudes from the housing (1).

9. A press, particularly a baling press, with a lubricant or hydraulic pump according to one of Claims 1 to 8.

## Revendications

1. Pompe hydraulique ou à lubrifiant, pour le transport d'huile ou autre, avec un boîtier (1) constitué d'au moins deux coques de boîtier (2, 3) construites de manière essentiellement similaire ou identique, une entrée (7) prévue sur ou dans le boîtier (1), un élément d'entraînement formé en particulier comme un plateau oscillant (17), monté tournant dans le boîtier (1), et au moins un élément de pompe (5) coopérant avec l'élément d'entraînement (17) pour le transport d'huile ou autre, **caractérisée en ce que** les coques de boîtier (2, 3) comportent chacune plusieurs ouvertures (4, 6) fermées par des points de rupture privilégiés, au moins avant l'assemblage du boîtier (1), pour l'insertion d'éléments de pompe (5), des arbres d'entraînement ou de sortie (10) et/ou des entrées et des sorties (7).

2. Pompe hydraulique ou à lubrifiant selon la revendication 1, **caractérisée en ce que** le boîtier (1) est constitué de deux coques de boîtier (2, 3) en particulier vissées l'une avec l'autre, construites de manière essentiellement similaire, au moins avant l'assemblage du boîtier (1).

3. Pompe hydraulique ou à lubrifiant selon la revendication 1 ou 2, **caractérisée en ce que** les coques de boîtier (2, 3) comportent au moins une, de préférence six, en particulier douze ouvertures (4) fermées par des points de rupture privilégiés, au moins avant l'assemblage du boîtier (1), pour l'insertion d'éléments de pompe (5).

4. Pompe hydraulique ou à lubrifiant selon l'une des revendications 1 à 3, **caractérisée en ce que** dans les coques de boîtier (2, 3) sont prévues plusieurs ouvertures (4) pour l'insertion d'éléments de pompe (5), qui se trouvent sur au moins une, de préférence sur deux voies concentriques par rapport à l'axe (18) de l'élément d'entraînement (17).

5. Pompe hydraulique ou à lubrifiant selon l'une des revendications 1 à 4, **caractérisée en ce que** l'élément d'entraînement est formé comme un plateau oscillant (17), comportant au moins une, de préférence deux voies de guidage (19) disposée(s) de façon concentrique par rapport à l'axe (18) de l'élément d'entraînement (17), avec lesquelles l'au moins un élément de pompe (5) coopère pour le transport d'huile ou autre.

6. Pompe hydraulique ou à lubrifiant selon l'une des revendications 1 à 5, **caractérisée en ce que** les coques de boîtier (2, 3) sont conçues comme des pièces moulées par injection en matière plastique, faciles à démouler et de préférence sans contre-dépouille.

7. Pompe hydraulique ou à lubrifiant selon l'une des revendications 1 à 6, **caractérisée en ce que** l'élément d'entraînement (17) comporte une denture sur une surface périphérique extérieure, qui engrène avec une denture d'un pignon menant (16) fixé sur un arbre d'entrée (10).

8. Pompe hydraulique ou à lubrifiant selon l'une des revendications 1 à 7, **caractérisée en ce que** l'élément d'entraînement (17) est disposé sur un arbre (18) avec une extrémité d'arbre libre dépassant du boîtier (1).

9. Presse, en particulier presse à bottes, avec une pompe hydraulique ou à lubrifiant selon l'une des revendications 1 à 8.
